# EUROPÄISCHE PATENTSCHRIFT

(11) **EP 0 971 550 B1**
(45) Veröffentlichungstag und Bekanntmachung des Hinweises auf die Patenterteilung: **23.01.2008**
(21) Anmeldenummer: 99112579.0
(22) Anmeldetag: 01.07.1999
(51) Int. Cl.: H04Q 7/22, H04Q 3/00

(54) **Verfahren und Mobilfunknetz zur Behandlung eines Paketdatendienstes**
Method and mobile radio network for handling packet data service
Méthode et réseau mobile radio pour traiter le service de données en mode paquet

(30) Priorität: 06.07.1998 DE 19830164; 27.10.1998 DE 19849540
(43) Veröffentlichungstag der Anmeldung: 12.01.2000
(73) Patentinhaber: Nokia Siemens Networks GmbH & Co. KG, 81541 München (DE)
(72) Erfinder: Kreppel, Jan, 82377 Penzberg (DE)

(56) Entgegenhaltungen:
- WO-A-00/21310
- WO-A-97/27713
- WO-A-99/60801
- SMITH D G: "AN INTRODUCTION TO GSM ENHANCEMENTS FOR OPERATOR SPECIFIC SERVICES (CAMEL)" IEE COLLOQUIUM ON MOBILE COMMUNICATIONS TOWARDS THE NEXT MILLENIUM AND BEYOND, IEE, LONDON, GB, 17. Mai 1996 (1996-05-17), Seiten 6-1-6-9, XP000605991

## Beschreibung

Die Erfindung betrifft ein Verfahren und ein Mobilfunknetz zur Behandlung eines Paketdatendienstes gemäß dem Oberbegriff des Patentanspruchs 1 bzw. des Patentanspruchs 21.

Für verbindungsorientierte Kommunikationsdienste in einem Kommunikationsnetz ist es bekanntlich möglich, die Verbindungen durch ein Intelligentes Netz (IN) steuern zu lassen. So ist beispielsweise für Mobilfunknetze nach dem GSM-Standard (Global System for Mobile Communication) eine CAMEL-Plattform (Customized Applications for Mobile network Enhanced Logic) gemäß der GSM-Empfehlung 03.78 definiert, um eine möglichst weltweite Nutzung von IN-Leistungsmerkmalen zu ermöglichen. Die übliche Architektur des Intelligenten Netzes sieht eine Dienstevermittlungsfunktion (Service Switching Function) und eine Dienstesteuerungsfunktion (Service Control Function) vor, die über eine Signalisierungsstrecke miteinander verbunden sind, siehe zum Beispiel die WO-A-97/27713. Als Applikation wird hierbei ein spezielles Protokoll verwendet, das beispielsweise für das Mobilfunknetz aus dem CAP-Protokoll (CAMEL Application Part) besteht.

In bestehende Mobilfunknetze - wie dem nach dem GSM-Standard - werden neuartige Datendienste - wie der Paketdatendienst GPRS (General Packet Radio Service) gemäß der GSM-Empfehlung 03.60 - eingeführt. Die Datenübertragung findet hierbei im Mobilfunknetz nicht verbindungsorientiert, sondern in Form von Paketdaten statt. Der Vorteil der paketorientierten Übertragung liegt darin, die gegebenen Übertragungsressourcen im Mobilfunknetz besser ausnutzen zu können. Die Netzarchitektur für den Paketdatendienst sieht vor, daß das vom mobilen Teilnehmer benutzte Kommunikationsendgerät - die Mobilstation - an ihrem jeweiligen Aufenthaltsort von einem speziellen Dienstenetzknoten (Serving GPRS Support Node) bedient wird. Um Paketdaten zu empfangen oder zu senden, ist der Zugang zu einem Paketdatennetz erforderlich. Zu diesem Zweck werden ein oder mehrere Zugangsnetzknoten (Gateway GPRS Support Nodes) bereitgestellt, die jeweils diesen Zugang zum Paketdatennetz - z.B. dem Internet - realisieren und dabei ein zugehöriges Paketdatenprotokoll - z.B. das Internet-Protokoll - unterstützen. Die Paketdatenübertragung erfolgt über einen Tunnel, der zwischen Dienstenetzknoten und Zugangsnetzknoten geschaltet ist. Eine Unterstützung der Paketdatenübertragung gemäß dem Paketdatendienst durch die übliche IN-Architektur ist derzeit nicht möglich.

Daher ist es Aufgabe der vorliegenden Erfindung, ein Verfahren und ein Mobilfunknetz anzugeben, durch das eine Behandlung des Paketdatendienstes zur Paketdatenübertragung über eine IN-Architektur ermöglicht wird.

Diese Aufgabe wird gemäß der Erfindung hinsichtlich des Verfahrens durch die Merkmale des Patentanspruchs 1 und hinsichtlich des Mobilfunknetzes durch die Merkmale des Patentanspruchs 21 gelöst. Weiterbildungen der Erfindung sind den Unteransprüchen zu entnehmen.

Ausgehend von der Behandlung eines Paketdatendienstes im Mobilfunknetz durch einen Dienstenetzknoten in Verbindung mit einem Zugangsnetzknoten zur Übertragung von Paketdaten erfolgt erfindungsgemäß ein Interworking des Paketdatendienstes mit Netzfunktionen eines Intelligenten Netzes, von denen eine Dienstevermittlungsfunktion mit dem Dienstenetzknoten zusammengeschaltet und eine Dienstesteuerungsfunktion über eine Schnittstelle an den Dienstenetzknoten mit integrierter Dienstevermittlungsfunktion angeschaltet wird. Durch das Interworking mit Integration der Dienstevermittlungsfunktion in den Dienstenetzknoten läßt sich überhaupt erst die Behandlung des Paketdatendienstes über IN-Funktionen erreichen, was den Vorteil einer gleichartigen Dienstebehandlung wie alle anderen IN-Dienste hat. Die neu geschaffene Schnittstelle für das Interworking zwischen Dienstenetzknoten mit integrierter Dienstevermittlungsfunktion und Dienstesteuerungsfunktion unterstützt dabei die einheitliche Dienstebehandlung, die somit sowohl für paketorientierte Kommunikation als auch für verbindungsorientierte Kommunikation anwendbar ist. Das Einbinden der Dienstevermittlungsfunktion des Intelligenten Netzes in den Dienstenetzknoten bringt darüber hinaus den Vorteil mit sich, daß die zur Dienstebehandlung notwendigen teilnehmerbezogenen Daten - wie beispielsweise der Aufenthaltsort der Mobilstation, die Identifikationsdaten usw. - der Dienstevermittlungsfunktion direkt vom Dienstenetzknoten - und nicht über "Umwege" - zur Verfügung gestellt werden können.

Von Vorteil hat sich gemäß einer Weiterbildung der Erfindung erwiesen, dass vom Dienstenetzknoten mit integrierter Dienstevermittlungsfunktion mehrere Zustände gemäß einem Zustandsmodell zur Behandlung des Paketdatendienstes benutzt und Zustandsübergänge zwischen den Zuständen für das Interworking mit den Netzfunktionen des Intelligenten Netzes ausgewertet werden.

Gemäß einer anderen vorteilhaften Weiterbildung der Erfindung werden Nachrichten zur Durchführung von Operationen für den Paketdatendienst über die Schnittstelle zwischen Dienstevermittlungsfunktion und Dienstesteuerungsfunktion gesendet und empfangen.

Als günstige Variante des Interworkings gemäß der Erfindung hat sich erwiesen, bestimmte Ereignisse als Triggerpunkte für den Paketdatendienst zur Eröffnung einer Kommunikation zwischen Dienstevermittlungsfunktion und Dienstesteuerungsfunktion zu benutzen. Darüber hinaus können auch Ereignisse als Ereignispunkte für den Paketdatendienst benutzt werden, deren Eintreten jeweils von der im Dienstenetzknoten integrierten Dienstevermittlungsfunktion gemeldet wird.

Die Erfindung wird anhand eines in der Zeichnung dargestellten Ausführungsbeispiels näher erläutert. Im einzelnen zeigen
- FIG 1: das Blockschaltbild eines Mobilfunknetzes zur Behandlung des Paketdatendienstes gemäß der Erfindung,
- FIG 2: das Blockschaltbild eines Zustandsmodells für die Behandlung des Paketdatendienstes in dem Dienstenetzknoten mit integrierter Dienstevermittlungsfunktion, und
- FIG 3: den Nachrichtenfluß zwischen den Netzeinrichtungen am Beispiel einer Vorausvergebührung mittels IN-Funktion bei Übertragung von Paketdaten gemäß dem Paketdatendienst.

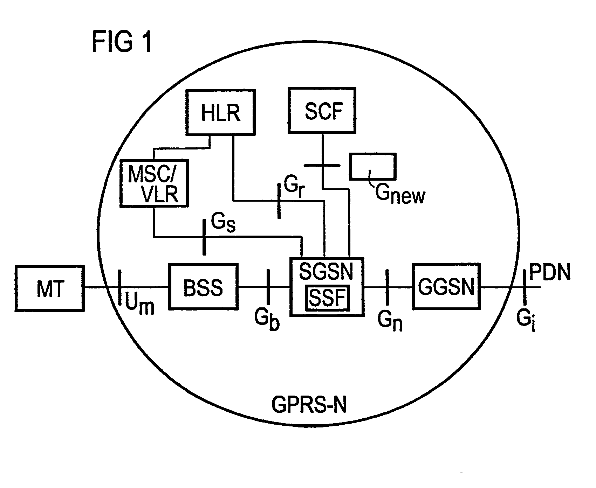

Das Blockschaltbild von FIG 1 zeigt die Netzarchitektur eines Mobilfunknetzes GPRS-N zur Behandlung eines Paketdatendienstes GPRS (General Packet Radio Service). Bekanntlich ist das Kommunikationsendgerät MT - die Mobilstation - eines mobilen Teilnehmers über eine Luftschnittstelle Um an das Mobilfunknetz GPRS-N, d.h. an dessen Basisstationssystem BSS mit ortsfesten Basisstationen und Basisstationssteuerungen, drahtlos angekoppelt. Zur Übertragung von Paketdaten zwischen der Mobilstation MT und einem Paketdatennetz PDN weist das Mobilfunknetz GPRS-N einen Dienstenetzknoten SGSN und einen Zugangsnetzknoten GGSN auf. Der Zugangsnetzknoten GGSN ist dabei über eine Schnittstelle Gi mit dem Paketdatennetz PDN verbunden, während der Dienstenetzknoten SGSN an das Basisstationssystem BSS über eine Schnittstelle Gb angeschlossen ist. Neben dem Basisstationssystem BSS ist ein Vermittlungssystem mit üblicherweise mehreren Mobilvermittlungsstellen und Teilnehmerdatenbasen im Mobilfunknetz GPRS-N vorgesehen. Im vorliegenden Beispiel sind eine Mobilvermittlungsstelle MSC mit zugehöriger Teilnehmerdatenbasis VLR über eine Schnittstelle Gs sowie eine zentrale Teilnehmerdatenbasis HLR über eine Schnittstelle Gr an den Dienstenetzknoten SGSN angeschaltet. Die als Register realisierten Teilnehmerdatenbasen VLR, HLR enthalten bekanntlich die Teilnehmer- und Dienstedaten des mobilen Teilnehmers, abhängig vom Aufenthaltsort seiner Mobilstation MT.

Um den Paketdatendienst wie einen IN-Dienst behandeln zu können, erfolgt ein Interworking des Paketdatendienstes mit Netzfunktionen eines Intelligenten Netzes (IN) derart, dass eine Dienstevermittlungsfunktion SSF mit dem Dienstenetzknoten SGSN zusammengeschaltet und eine Dienstesteuerungsfunktion SCF über eine neue Schnittstelle Gnew an den Dienstenetzknoten SGSN mit integrierter Dienstevermittlungsfunktion SSF angeschaltet ist. Da der Dienstenetzknoten SGSN über die notwendigen teilnehmerbezogenen Daten verfügt, wie z.B. den aktuellen Aufenthaltsort, die Identifikationsdaten etc., ist er der optimale Ort für die Zusammenführung der Funktionen des Paketdatendienstes und der IN-Funktionen im Mobilfunknetz GPRS-N. Im Dienstenetzknoten SGSN befindet sich ein Packet-Relay, das unter anderem die Schnittstelle Gb zum Basisstationssystem BSS auf die Schnittstelle Gn zum Zugangsnetzknoten GGSN und umgekehrt abbildet und die Datenpakete in beiden Richtungen weiterleitet. Darüber hinaus steuert dieses Pakket-Relay das Mobilitätsmanagement - z.B. hier für den Paketdatendienst GPRS - und wird konzeptionell zur Integration der Dienstevermittlungsfunktion SSF in den Dienstenetzknoten SGSN genutzt.

Zur Auslösung der IN-Dienste einschließlich des Paketdatendienstes sind folgende Mechanismen denkbar:
- persönlich zugeordnete IN-Dienste, die in die Teilnehmerdatenbasis eingetragen werden, oder
- fest zugeordnete IN-Dienste, oder
- vom Teilnehmer selbst aktivierte IN-Dienste, z.B. über ein Parameterprofil.

Für den Paketdatendienst existiert zunächst keine Verbindung im Netz. Um den Dienst zu nutzen, muß sich der mobile Teilnehmer im Netz anmelden - wie auch bei verbindungsorientierten Diensten. Bei dieser Gelegenheit wird seine Identität und Berechtigung überprüft. Im zweiten Schritt muß ein Paketdatenprotokoll aktiviert werden. Das Netz GPRS-N etabliert nun einen Tunnel zwischen dem Dienstenetzknoten SGSN und dem Zugangsnetzknoten GGSN zum Paketdatennetz PDN. In der Folge können Pakete zwischen dem Teilnehmer und dem Paketdatennetz ausgetauscht werden. Die Gesamtheit der Zustände eines mobilen Teilnehmers bzgl. des Paketdatendienstes GPRS wird im folgenden als "Session" bezeichnet.

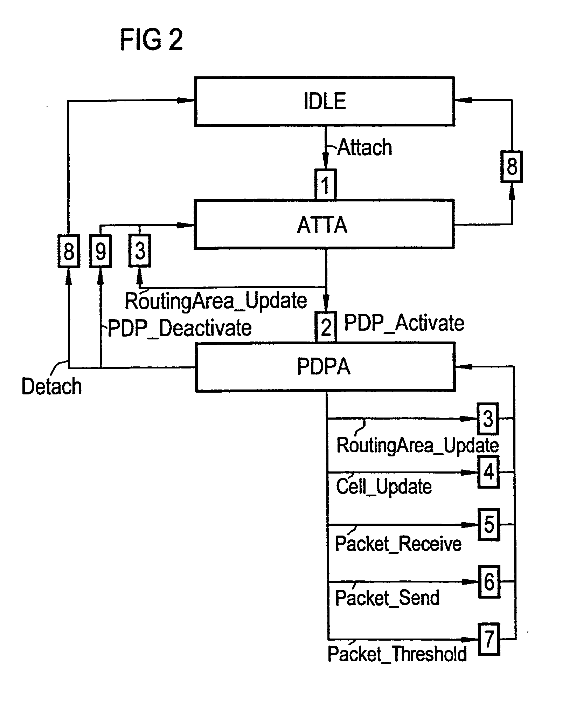

FIG 2 zeigt in einem Blockschaltbild das Zustandsmodell zur Behandlung des Paketdatendienstes in dem Dienstenetzknoten SGSN mit integrierter Dienstevermittlungsfunktion SSF gemäß FIG 1. Dieses Zustandsmodell leitet sich aus der "Session" eines mobilen Teilnehmers her und umfasst für die Mobilstation MT des mobilen Teilnehmers mehrere Zustände, die zum Interworking mit den Netzfunktionen des Intelligenten Netzes ausgewertet werden können. Eine Besonderheit stellt dabei der Übergang zu einem neuen Dienstenetzknoten SGSN dar, falls der Teilnehmer den Versorgungsbereich eines alten Dienstenetzknotens SGSN verläßt. Folgende Zustände sind zu unterscheiden:

### IDLE

In diesem Zustand ist die Mobilstation nicht im Mobilfunknetz eingebucht. Durch ein erfolgreiches Einbuchen wird der Übergang in einen Zustand ATTA (Attached) - siehe unten - erreicht. Aus den Zuständen ATTA und einem weiteren Zustand PDPA (Packet Data Protocol ACTIVE) - siehe ebenso unten - kann der Zustand IDLE durch Ausbuchen aus dem Netz erreicht werden.

### ATTA

Dieser Zustand ist erreicht, wenn sich die Mobilstation erfolgreich einbucht. Durch Aktivieren eines Paketdatenprotokolls wird der Zustand PDPA erreicht. Durch Ausbuchen aus dem Netz wird der Zustand IDLE erreicht. Im Zustand ATTA ist ausserdem die Aktualisierung des Aufenthaltsortes auf der Basis einer Routing-Area möglich. Letztgenannte Ereignisse führen nicht zu einem Zustandsübergang.

### PDPA

Dieser Zustand ist erreicht, wenn ein Paketdatenprotokoll von der Mobilstation erfolgreich aktiviert wurde. Durch das Ausbuchen aus dem Netz wird der Zustand IDLE erreicht. Im Zustand PDPA ist außerdem die Aktualisierung des Aufenthaltsortes auf der Basis eines Funkzellengebiets (cell area) bzw. eines Routinggebiets (Routing-Area) möglich. Letztgenannte Ereignisse führen zu keinem Zustandsübergang. Weitere Ereignisse, die keinen Zustandsübergang bewirken, sind das Senden oder Empfangen eines Pakets, sowie das Überschreiten eines Schwellwertes für gesendete und/oder empfangene Pakete.

Diese Zustandsübergänge werden für ein Interworking zwischen dem Dienstenetzknoten (SGSN, siehe FIG 1) mit der integrierten Dienstevermittlungsfunktion (SSF, siehe FIG 1) und der Dienstesteuerungsfunktion (SCF, siehe FIG 1) benutzt. Zur Eröffnung einer Kommunikation, beispielsweise einer Kontroll- oder Überwachungsbeziehung (Control oder Monitoring Relationship), zwischen Dienstevermittlungsfunktion und Dienstesteuerungsfunktion werden Triggerpunkte (Trigger Detection Points, TDP) benötigt. Als Triggerpunkte werden vorzugsweise folgende Ereignisse benutzt:
- [1] Attach: ein Teilnehmer bzw. seine Mobilstation meldet sich im GPRS-Mobilfunknetz an, was den Übergang vom Zustand IDLE zum Zustand ATTA nach sich zieht.
- [2] PDP_Activate: ein Teilnehmer bzw. seine Mobilstation aktiviert ein Paketdatenprotokoll, was den Übergang vom Zustand ATTA zum Zustand PDPA bewirkt.

Alle Triggerpunkte sind sowohl in einem Anforderungsmodus (Request mode) als auch in einem Nachrichtenmodus (Notification mode) möglich.

Als Ereignispunkte (Event Detection Points, EDP) für den Paketdatendienst werden folgende Ereignisse verwendet, die Aktionen des mobilen Teilnehmers bzw. seiner Mobilstation MT definieren und bei deren Eintreten jeweils eine Meldung von der Dienstevermittlungsfunktion (SSF) initiiert wird:
- [2] PDP_ Activate: ein Teilnehmer aktiviert ein Paketdatenprotokoll.
- [3] RoutingArea_Update: ein Teilnehmer wechselt in eine neue Routing Area.
- [4] Cell_Update: ein Teilnehmer wechselt in eine neue Funkzelle.
- [5] Packet_Receive: ein Teilnehmer empfängt zumindest ein Datenpaket.
- [6] Packet_Send: ein Teilnehmer sendet zumindest ein Datenpaket.
- [7] Packet_Threshold: die eingehenden und/oder ausgehenden Datenpakete eines Teilnehmers überschreiten einen zuvor definierten Schwellwert.
- [8] Detach: ein Teilnehmer meldet sich im GPRS-Mobilfunknetz ab.
- [9] PDP_Deactivate: ein Teilnehmer deaktiviert ein Paketdatenprotokoll.

Dabei werden die Ereignispunkte zunächst von der Dienstevermittlungsfunktion (SSF) "armiert", d.h. die Dienstesteuerungsfunktion (SCF) veranlaßt sie, das Eintreten eines bestimmten Ereignisses zu melden. Alle Ereignispunkte sind sowohl im Anforderungs- als auch im Nachrichten-Modus armierbar.

Bestimmte Operationen werden über die neue Schnittstelle zwischen Dienstevermittlungsfunktion (SSF) und Dienstesteuerungsfunktion (SCF) durchgeführt. Bei jeder Operation unterscheidet man zwischen einer auslösenden Instanz ("initiating entity") und einer antwortenden Instanz ("responding entity"). Die Operationen können ebenso wie bei der verbindungsorientierten Übertragung von Sprachsignalen auf Basis der CCS7-Signalisierung durchgeführt werden. Es ist aber ebenso jede andere Signalisierung möglich, z.B. kann der Nachrichtenaustausch auch auf Basis von Internetprotokoll (IP) etc. stattfinden.

Folgende Nachrichten sind für ein Interworking zwischen Paketdatendienst GPRS und Intelligentem Netz vorgesehen:

### IDP (InitialDetectionPoint)

Diese Nachricht dient zur Eröffnung der Kontroll- oder Überwachungsbeziehung zwischen Dienstevermittlungsfunktion (SSF) und Dienstesteuerungsfunktion (SCF) bzgl. eines GPRS-Teilnehmers. Die Nachricht wird durch das Erreichen eines Triggerpunktes ausgelöst. Vorzugsweise müssen noch bestimmte Voraussetzungen zusätzlich erfüllt sein, damit die IDP-Operation ausgelöst wird. Dafür gibt es verschiedene Möglichkeiten:

Das betreffende Ereignis - beispielsweise Attach - tritt ein und es ist im Dienstenetzknoten (SGSN) fest eingestellt, daß eine SSF/SCF-Assoziation zu eröffnen ist. Hierfür werden geeignete Daten - die Trigger-Profile - in der Datenbasis des Dienstenetzknotens (SGSN) hinterlegt, aus denen die Adresse der Dienstevermittlungsfunktion (SSF), sowie Daten, die den Dienst adressieren, entnommen werden können.

Das betreffende Ereignis - z.B. Attach - tritt ein und aus dem Teilnehmerprofil, das vom HLR abgefragt wird, geht hervor, daß eine SSF/SCF-Assoziation zu eröffnen ist. Hierfür werden geeignete Daten (siehe oben) innerhalb des Teilnehmerprofils hinterlegt (z.B. Service Indication wie in CAMEL definiert).

Das betreffende Ereignis - z.B. RoutingArea_Update - tritt ein und aus den Teilnehmer-Kontextdaten, die bei einem Übergang auf einen neuen SGSN vom alten SGSN abgefragt werden, geht hervor, daß eine SSF/SCF-Assoziation zu eröffnen ist. Hierfür werden geeignete Daten (siehe oben) innerhalb der Teilnehmer-Kontextdaten hinterlegt (z.B. Service Indication wie in CAMEL definiert).

Das betreffende Ereignis - z.B.PDP_Activate - tritt ein und aus den Parametern der Nachrichten an der Schnittstelle zum Basisstationssystem (G_{b}-Interface) geht hervor, daß ein bestimmter IN-Dienst zu aktivieren ist. Die benötigten Diensteparameter werden aus einem im SGSN hinterlegten Profil entnommen (siehe 1.). In die entsprechenden Nachrichten des bestehenden GPRS-Standards (zum Anmelden bzw. Aktivieren eines Paketdatenprotokolls) müssen geeignete Parameter zur Dienstauswahl aufgenommen werden. Dabei können auch bereits bestehende Parameter - wie z.B. der Typ eines zur Übertragung der Paketdaten vorgesehenen Paketdatenprotokolls oder die Adresse des gewünschten Zugangsnetzknotens des Mobilfunknetzes - benutzt werden.

Wenn eine der o.g. Bedingungen erfüllt ist, initiiert die Dienstevermittlungsfunktion (SSF) die IDP-Operation durch Senden einer Nachricht. Die Nachricht enthält u.a. folgende Parameter:
- Teilnehmerkennung (IMSI) zur Identifikation des Teilnehmers
- eine Kennung (PDPContextIdentifier) der jeweiligen Paketdatenübertragung
- Location (= Zell-Identifikation) des Teilnehmers
- Typ des Triggerpunktes
- Gewünschter Paketdatenprotokolltyp (PDP Type)
- Gewünschter Zugriffspunkt (GGSN-Adresse oder Name)
- Gewünschte Dienstequalität (QoS, Quality of Service)
- Identifikation des Dienstes (Service Key)

Das Datum PDPContextIdentifier erlaubt der Dienstesteuerungsfunktion (SCF) eine eindeutige Identifikation einer Paket-"Session" im GPRS-Mobilfunknetz. Dies ist dann notwendig, wenn beispielsweise für einen Teilnehmer mehrere Paketdatenübertragungen und damit mehrere SCF/SSF-Assoziationen existieren.

Handelt es sich um einen Triggerpunkt im Anforderungs-Modus, so ist die Dienstesteuerungsfunktion (SCF) nun angehalten, über die Zulässigkeit der gewünschten Aktion - z.B. Aktivierung eines Paketdatenprotokolls - zu entscheiden. Dazu wird eine der folgenden Operationen "GRA" oder "REJ" verwendet.

### GRA (Grant)

Diese Operation wird von der Dienstesteuerungsfunktion SCF verwendet, um die Dienstevermittlungsfunktion SSF anzuweisen, eine gewünschte Aktion - z.B. Aktivieren des Paketdatenprotokolls - zuzulassen. Die Operation wird durch Senden einer Nachricht eingeleitet. Parameter sind u.a.
- Zulässige Dienstequalität (Quality of Service).
- Identifikation eines Zugriffspunkts (= GGSN-Adresse oder Name).

Die Dienstevermittlungsfunktion SSF bzw. der Dienstenetzknoten SGSN setzt nun die Bearbeitung fort, indem z.B. ein Paketdatenprotokoll aktiviert wird. Dabei werden Parameter der Grant-Operation berücksichtigt, d.h. der Teilnehmer erhält ggf. lediglich die von der Dienstesteuerungsfunktion SCF festgelegte Quality of Service, und der Zugang zum Paketdatennetz erfolgt über den von der Dienstesteuerungsfunktion SCF festgelegten Zugangsknoten GGSN.

### REJ (Reject)

Diese Operation wird von der Dienstesteuerungsfunktion SCF verwendet, um die Dienstevermittlungsfunktion SSF anzuweisen, eine gewünschte Aktion nicht zuzulassen. Die Operation wird durch Senden einer Nachricht eingeleitet. Parameter sind u.a.

### - Ursache für die Zurückweisung (Reject Cause)

Die Dienstevermittlungsfunktion SSF bzw. der Dienstenetzknoten SGSN setzt die Bearbeitung fort, indem die gewünschte Aktion abgelehnt wird bzw. das Paketdatenprotokoll vom Netzwerk deaktiviert wird. Dazu ist es notwendig, an der Schnittstelle zur MS eine entsprechende Nachricht zu senden, wie im Protokoll vorgesehen (GPRS Mobility Management: Attach Reject, Routing Area Update Reject, GPRS Session Management: Activate PDP Context Reject, Deactivate PDP context request).
Die Ursache für die Zurückweisung kann auf die entsprechenden Parameter oben genannter Nachrichten an die Mobilstation abgebildet werden.

### RRBE (RequestReportBSSMEvent)

Diese Operation wird von der Dienstesteuerungsfunktion SCF verwendet, um die Dienstevermittlungsfunktion SSF anzuweisen, ein bestimmtes Ereignis zu überwachen und das Eintreten des Ereignisses zu melden (siehe unten, ERB-Operation). Die Operation wird durch Senden einer Nachricht eingeleitet. Parameter sind u.a.
- Typ des/ bzw. der zu überwachenden Ereignisses
- Falls das Ereignis "Packet_Threshold" armiert wird:
   - Höhe des Schwellwertes.
   - Typ des Schwellwertes (Anzahl Bytes, Anzahl Pakete).
   - Zeitintervall für die Überwachung des Schwellwertes.
   - Zählmethode (seit Beginn der Übertragung, bei jedem Überlauf zurücksetzen, Bei Erhalt der Zählanweisung auf Null setzen).
   - Richtung (eingehend, abgehend, beide Richtungen)
   - Geforderte Reaktion bei Überschreitung (Abbruch der Übertragung, Lediglich Meldung).

Die Dienstevermittlungsfunktion SSF meldet nun bei Eintritt das genannte Ereignis mittels ERB (EventReportBSSM).

### ERB (EventReportBSSM)

Diese Operation wird von der Dienstevermittlungsfunktion SSF verwendet, um das Eintreten eines zuvor armierten Ereignisses an die Dienstesteuerungsfunktion SCF zu melden. Die Operation wird durch Senden einer Nachricht eingeleitet. Parameter sind u.a.
- Typ des Ereignisses.
- Falls das Ereignis "Packet_Threshold" gemeldet wird: Höhe des aktuellen Zählstandes.

Die Dienstesteuerungsfunktion SCF registriert das Ereignis und sendet ggf. weitere Instruktionen.

### CAA (CancelAssociation)

Diese Operation dient dazu, eine Assoziation mit einer Dienstevermittlungsfunktion SSF zu beenden. Die Operation ist in Zusammenhang mit dem Übergang auf einen neuen SGSN bzw. eine neue Dienstevermittlungsfunktion SSF notwendig. Es ist möglich, den abschließenden Zustand der Paket-Session von der Dienstevermittlungsfunktion SSF abzufragen. Parameter sind:
- Rückmelden des abschließenden Zustandes (ja/nein).

Die Dienstevermittlungsfunktion SSF antwortet ggf. mit CAR (CancelAssociationResponse).

### CAR (CancelAssociationResponse)

Diese Operation dient dazu, die Beendigung einer Assoziation an eine Dienstesteuerungsfunktion SCF zu bestätigen und den abschließenden Zustand an die Dienstesteuerungsfunktion SCF zu melden. Parameter sind:
- Zustand: Paket-Zählerstände für armierte Schwellwerte

Die Dienstesteuerungsfunktion SCF registriert den Zustand und erteilt ggf. Instruktionen an die Dienstevermittlungsfunktion SSF bei Übertritt in den neuen SGSN.

Ein Beispiel für die Anwendung des erfindungsgemäßen Interworkings zwischen dem Paketdatendienst GPRS und den IN-Funktionen zur gleichartigen Behandlung aller Dienste bezieht sich auf eine Vorausvergebührung ("Prepaid-Service") der Paketdatenübertragung. Diese Gebührenvorauszahlung wird über das Intelligente Netz IN realisiert. Den Teilnehmern, die diesen Dienst über entsprechende Kartenverträge nutzen, können auch die neuen Datendienste angeboten werden, d.h. Paketübertragungen müssen in diesem Fall über den IN-Dienst vergebührt werden.

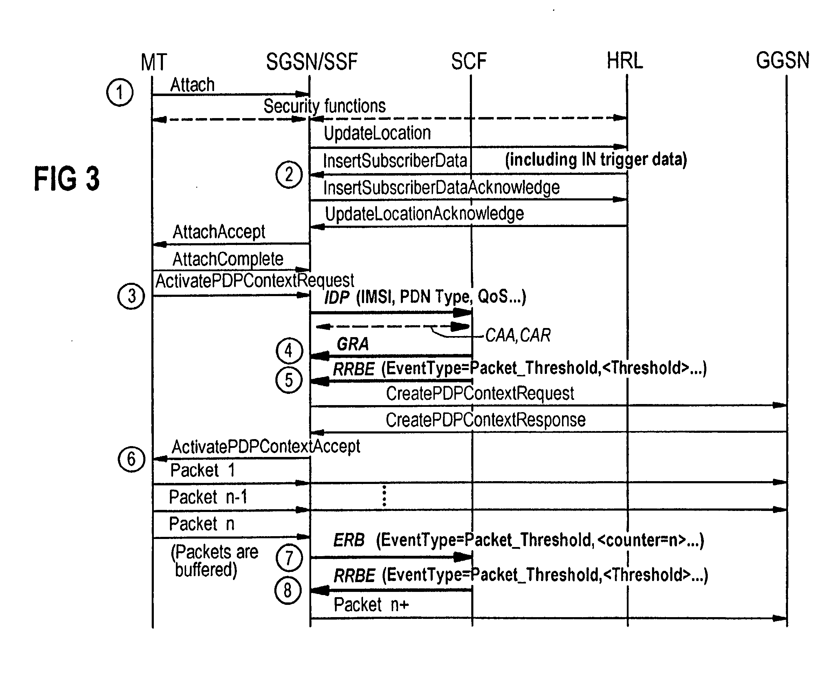

FIG 3 zeigt den beispielhaften Nachrichtenfluß zwischen Mobilstation MT, Dienstenetzknoten SGSN mit integrierter Dienstevermittlungsfunktion SSF, Dienstesteuerungsfunktion SCF, Teilnehmerdatenbasis HLR und Zugangsnetzknoten GGSN anhand aufeinanderfolgender Schritte (1) bis (8), die nachfolgend erläutert sind.
(1) : Die Mobilstation MT meldet sich beim GPRS-Mobilfunknetz an und sendet ihre Identifizierungsdaten - Attach, Security functions - über das Basisstationssystem zum Dienstenetzknoten SGSN. In der Folge wird die Mobilstation MT in bekannter Weise gemäß dem GSM-Standard über die Teilnehmerdatenbasis HLR im Netz authentifiziert, wobei entsprechende Daten über den Dienstenetzknoten SGSN und das Basisstationssystem mit der Mobilstation MT ausgetauscht werden.
(2): Die Teilnehmerdatenbasis HLR sendet auf eine Anforderungsnachricht - Update Location - des Dienstenetzknotens SGSN die Teilnehmerdaten - InsertSubscriberData - und empfängt im Anschluss daran eine Bestätigungsnachricht - Insert-SubscriberDataAcknowledge - vom Dienstenetzknoten SGSN, durch die das Eintreffen der angeforderten Teilnehmerdaten bestätigt wird. Die Teilnehmerdaten enthalten auch Triggerdaten - IN trigger data - aus denen hervorgeht, daß der Teilnehmer einen persönlichen IN-Dienst - im vorliegenden Beispiel den Prepaid-Service - in Anspruch nimmt.
   Die Teilnehmerdatenbasis HLR beantwortet die Anforderung von Daten durch Aussenden einer Bestätigungsnachricht - UpdateLocationAcknowledge - zum Dienstenetzknoten SGSN. Der Einbuchungsvorgang wird durch Senden einer Nachricht - Attach Accept - vom Dienstenetzknoten SGSN zur Mobilstation MT und durch Rücksenden einer anderen Nachricht - Attach Complete - von der Mobilstation MT zum Dienstenetzknoten SGSN ausgeführt.
(3) : Der Teilnehmer versucht über seine Mobilstation MT mittels einer Nachricht - ActivatePDPContextRequest - ein Paketdatenprotokoll zu aktivieren. Wegen der Zuordnung eines IN-Dienstes in der Teilnehmerdatenbasis HLR führt dies dazu, daß ein IN-Dialog aufgenommen wird. Dabei sendet die Dienstevermittlungsfunktion SSF die Nachricht IDP (Initial Detection Point) an die Dienstesteuerungsfunktion SCF, in der u.a. die Teilnehmer-Identität IMSI, der gewünschte IN-Dienst, sowie die Daten PDP-Type, QoS zum gewünschten Paketdatenprotokoll übertragen werden.
   Für den Fall, dass eine Assoziation zwischen Dienstesteuerungsfunktion SCF und Dienstevermittlungsfunktion SSF bestanden hat und ein Umschalten dieser Assoziation von einem alten Dienstenetzknoten zu einem neuen Dienstenetzknoten SGSN erfolgt ist - erkennbar an der Nachricht IDP - beendet die Dienstesteuerungsfunktion SCF nun die bisherige Assoziation zum alten Dienstenetzknoten durch Auslösen einer Nachricht CAA (CancelAssociation). Der alte Dienstenetzknoten bestätigt die Beendigung der Assoziation durch Auslösen bzw. Senden einer Nachricht CAR (Cancel AssociationResponse), wobei sämtliche Zustandsdaten der Assoziation mitgesendet werden.
(4) : Die Dienstesteuerungsfunktion SCF prüft, ob der Teilnehmer die Berechtigung hat, das Paketdatenprotokoll mit der verlangten Dienstequalität QoS zu aktivieren und ob das Konto des Teilnehmers genügend Deckung aufweist. Ist dies der Fall, so sendet die Dienstesteuerungsfunktion SCF die Nachricht GRA zur Dienstevermittlungsfunktion SSF.
(5) : Die Dienstesteuerungsfunktion SCF setzt einen ersten Schwellwert für Datenpakete, indem sie die Nachricht RRBE (RequestReportBSSMEvent) zur Dienstevermittlungsfunktion SSF sendet, in der u.a. der Ereignispunkt Packet_Threshold und der Schwellwert Threshold für die eingehenden/abgehenden Datenpakete definiert sind.
(6) : Die Aktivierung des Paketdatenprotokolls beginnt, indem die Nachrichten CreatePDPContextRequest, CreatePDPContextResponse zwischen dem Dienstenetzknoten SGSN und dem Zugangsnetzknoten GGSN übertragen werden. Eine Bestätigung an die Mobilstation MT folgt in der Nachricht ActivatePDPContextAccept, die vom Dienstenetzknoten SGSN initiiert und über das Basisstationssystem weitergeleitet wird. Die Paketübertragungen in Richtung von der Mobilstation MT zum Dienstenetzknoten SGSN und vom Dienstenetzknoten SGSN zum Zugangsnetzknoten GGSN setzen ein, beginnend mit einem Paket 1 bis zu einem Paket n. Die eintreffenden Pakete werden dabei im Dienstenetzknoten SGSN zwischengespeichert.
(7): Es sei angenommen, daß nach dem übermittelten Paket n der Schwellwert erreicht ist. Die Dienstevermittlungsfunktion SSF unterbricht daher die Weiterleitung der Pakete an den Zugangsnetzknoten GGSN und meldet das Ereignis mittels der Nachricht ERB (EventReportBSSM) an die Dienstesteuerungsfunktion SCF. Die Nachricht ERB weist u.a. den Ereignispunkt Packet_Threshold und einen Zählerstand counter=n als Parameter auf.
(8) : Die Dienstesteuerungsfunktion SCF führt daraufhin eine Zwischenvergebührung für die bisher übertragenen Pakete durch. Die Berechnung der Gebühren erfolgt auf Basis des gemeldeten Volumens, wobei ein Tarifmodell angewendet wird, das den Preis pro Volumeneinheit (z.B. Kilobyte) unter Berücksichtigung weiterer Kriterien, wie z.B. Wochentag und Uhrzeit, sowie die Entfernung zwischen der Mobilstation MT und dem Zugangsnetzknoten GGSN, bestimmt. Sofern das Teilnehmerkonto weiterhin genügend Deckung aufweist, wird von der Dienstevermittlungsfunktion SSF ein neuer Schwellwert Threshold gesetzt und zusammen mit dem Ereignispunkt Packet_Threshold in der Nachricht RRBE (RequestReportBSSM Event) an die Dienstesteuerungsfunktion SCF gesendet. Die Paketübertragung kann durch den Dienstenetzknoten SGSN fortgesetzt werden, indem weitere Pakete n+ zum Zugangsnetzknoten GGSN gesendet werden. Falls keine Deckung des Kontos mehr vorhanden ist, sendet die Dienstesteuerungsfunktion SCF die Nachricht REJ (Reject). Die Dienstevermittlungsfunktion SSF bewirkt dann die Deaktivierung des Paketdatenprotokolls und signalisiert dies an die Mobilstation MT. Weitere Pakete werden in diesem Fall vom Dienstenetzknoten SGSN verworfen und nicht weitergeleitet.

## Patentansprüche

1. Verfahren zur Behandlung eines Paketdatendienstes in einem Mobilfunknetz durch einen Dienstenetzknoten (SGSN), der mit einem Zugangsnetzknoten (GGSN) für die Anbindung an ein Paketdatennetz (PDN) zur Übertragung von Paketdaten von einem oder zu einem Kommunikationsendgerät (MT) eines mobilen Teilnehmers des Mobilfunknetzes verbunden ist,
**gekennzeichnet durch**
ein Interworking des Paketdatendienstes mit Netzfunktionen eines Intelligenten Netzes, von denen eine Dienstevermittlungsfunktion (SSF) mit dem Dienstenetzknoten (SGSN) zusammengeschaltet und eine Dienstesteuerungsfunktion (SCF) über eine Schnittstelle (Gnew) an den Dienstenetzknoten (SGSN/SSF) mit integrierter Dienstevermittlungsfunktion angeschaltet wird.

2. Verfahren nach Anspruch 1,
**dadurch gekennzeichnet,**
**dass** vom Dienstenetzknoten (SGSN/SSF) mit integrierter Dienstevermittlungsfunktion mehrere Zustände (IDLE, ATTA, PDPA) gemäß einem Zustandsmodell zur Behandlung des Paketdatendienstes benutzt und Zustandsübergänge zwischen den Zuständen (IDLE, ATTA, PDPA) für das Interworking mit den Netzfunktionen des Intelligenten Netzes ausgewertet werden.

3. Verfahren nach Anspruch 1 oder 2,
**dadurch gekennzeichnet,**
**dass** bestimmte Ereignisse (PDP_Activate, Attach) als Triggerpunkte für den Paketdatendienst zur Eröffnung einer Kommunikation zwischen Dienstevermittlungsfunktion (SSF) und Dienstesteuerungsfunktion (SCF) benutzt werden.

4. Verfahren nach Anspruch 3,
**dadurch gekennzeichnet,**
**dass** das Ereignis (Attach) aus dem Einbuchen des Kommunikationsendgeräts (MT) in das Mobilfunknetz besteht.

5. Verfahren nach Anspruch 3,
**dadurch gekennzeichnet,**
**dass** das Ereignis (PDP_Activate) aus dem Aktivieren eines Paketdatenprotokolls durch das Kommunikationsendgerät (MT) besteht.

6. Verfahren nach Anspruch 1 oder 2,
**dadurch gekennzeichnet,**
**dass** im Paketdatennetz (PDN) bestehende Parameter als Triggerpunkte für den Paketdatendienst zur Eröffnung einer Kommunikation zwischen Dienstevermittlungsfunktion (SSF) und Dienstesteuerungsfunktion (SCF) benutzt werden.

7. Verfahren nach Anspruch 6,
**dadurch gekennzeichnet,**
**dass** als Parameter der Typ eines zur Übertragung der Paketdaten vorgesehenen Paketdatenprotokolls oder die Adresse des Zugangsnetzknotens des Mobilfunknetzes benutzt werden.

8. Verfahren nach einem der vorhergehenden Ansprüche,
**dadurch gekennzeichnet,**
**dass** bestimmte Ereignisse (PDP_Activate, Detach, PDP_Deactivate, Packet_Threshold ...) als Ereignispunkte für den Paketdatendienst benutzt werden, deren Eintreten jeweils von der im Dienstenetzknoten (SGSN/SSF) integrierten Dienstevermittlungsfunktion gemeldet wird.

9. Verfahren nach einem der vorhergehenden Ansprüche,
**dadurch gekennzeichnet,**
**dass** Nachrichten (IDP, GRA, RRBE, ERB, CAA, CAR) zur Durchführung von Operationen für das Interworking zwischen Dienstevermittlungsfunktion (SSF) und Dienstesteuerungsfunktion (SCF) über die Schnittstelle (Gnew) gesendet und empfangen werden.

10. Verfahren nach Anspruch 9,
**dadurch gekennzeichnet,**
**dass** eine Nachricht (IDP) zur Eröffnung einer Assoziation zwischen Dienstevermittlungsfunktion (SSF) und Dienstesteuerungsfunktion (SCF) bei Erreichen eines Triggerpunktes ausgelöst wird.

11. Verfahren nach Anspruch 10,
**dadurch gekennzeichnet,**
**dass** anhand von jeweils für den mobilen Teilnehmer im Mobilfunknetz gespeicherten Teilnehmerdaten ermittelt wird, ob die Nachricht (IDP) zur Eröffnung einer Assoziation ausgelöst wird.

12. Verfahren nach Anspruch 10,
**dadurch gekennzeichnet,**
**dass** anhand von Teilnehmer-Kontextdaten, die bei einem Übergang von einem Dienstenetzknoten zu einem anderen Dienstenetzknoten abgefragt werden, ermittelt wird, ob die Nachricht (IDP) zur Eröffnung einer Assoziation ausgelöst wird.

13. Verfahren nach Anspruch 9,
**dadurch gekennzeichnet,**
**dass** von der Dienstesteuerungsfunktion (SCF) eine Nachricht (GRA) zur Anweisung an die Dienstevermittlungsfunktion (SSF), eine gewünschte Aktion zuzulassen, ausgelöst wird.

14. Verfahren nach Anspruch 9,
**dadurch gekennzeichnet,**
**dass** von der Dienstesteuerungsfunktion (SCF) eine Nachricht (REJ) zur Anweisung an die Dienstevermittlungsfunktion (SSF), eine gewünschte Aktion nicht zuzulassen, ausgelöst wird, die zumindest die Ursache der Zurückweisung der Aktion als Parameter enthält.

15. Verfahren nach Anspruch 9,
**dadurch gekennzeichnet,**
**dass** von der Dienstesteuerungsfunktion (SCF) eine Nachricht (RRBE) zur Anweisung an die Dienstevermittlungsfunktion (SSF), ein bestimmtes Ereignis zu überwachen und das Eintreten des Ereignisses zu melden, ausgelöst wird.

16. Verfahren nach Anspruch 15,
**dadurch gekennzeichnet,**
**dass** von der Dienstevermittlungsfunktion (SSF) eine Nachricht (ERB) zur Meldung des Eintretens des Ereignisses an die Dienstesteuerungsfunktion (SCF) ausgelöst wird.

17. Verfahren nach Anspruch 9,
**dadurch gekennzeichnet,**
**dass** von der Dienstesteuerungsfunktion (SCF) eine Nachricht (CAA) zur Beendigung einer Assoziation zwischen Dienstesteuerungsfunktion (SCF) und Dienstevermittlungsfunktion (SSF) an die Dienstevermittlungsfunktion (SCF) ausgelöst wird.

18. Verfahren nach Anspruch 17,
**dadurch gekennzeichnet,**
**dass** von der Dienstevermittlungsfunktion (SSF) eine Nachricht (CAR) zur Bestätigung der Beendigung der Assoziation an die Dienstesteuerungsfunktion (SCF) ausgelöst wird.

19. Verfahren nach einem der Ansprüche 9 bis 18,
**dadurch gekennzeichnet,**
**dass** mehrere Parameter (z.B. IMSI, PDP Type, QoS) für die auszuführende Operation in den Nachrichten (z.B. IDP) übertragen werden.

20. Verfahren nach einem der vorhergehenden Ansprüche,
**dadurch gekennzeichnet,**
**dass** das Interworking zwischen dem Paketdatendienst und der im Dienstenetzknoten (SGSN/SSF) integrierten Dienstevermittlungsfunktion sowie der Dienstesteuerungsfunktion (SCF) auf eine Vorausvergebührung der Paketdatenübertragung angewendet wird.

21. Mobilfunknetz zur Behandlung eines Paketdatendienstes durch einen Dienstenetzknoten (SGSN), der mit einem Zugangsnetzknoten (GGSN) für die Anbindung an ein Paketdatennetz (PDN) zur Übertragung von Paketdaten von einem oder zu einem Kommunikationsendgerät (MT) eines mobilen Teilnehmers des Mobilfunknetzes verbunden ist,
**dadurch gekennzeichnet,**
**dass** zum Interworking des Paketdatendienstes mit Netzfunktionen eines Intelligenten Netzes der Dienstenetzknoten (SGSN) mit einer Dienstevermittlungsfunktion (SSF) versehen ist, und eine Dienstesteuerungsfunktion (SCF) über eine Schnittstelle (Gnew) an den Dienstenetzknoten (SGSN/SSF) mit integrierter Dienstevermittlungsfunktion angeschaltet ist.

22. Mobilfunknetz nach Anspruch 21,
**dadurch gekennzeichnet,**
**dass** die Schnittstelle (Gnew) zur Übertragung von Nachrichten (IDP, GRA, RRBE, ERB, CAA, CAR) für die Durchführung von Operationen gemäß dem Paketdatendienst vorgesehen ist.

23. Mobilfunknetz nach Anspruch 22,
**dadurch gekennzeichnet,**
**dass** die Nachrichten (z.B. IDP) mehrere Parameter (z.B. IMSI, PDP Type, QoS) für die auszuführende Operation aufweisen.

## Claims

1. Method for handling a packet data service in a mobile radio network by a serving GPRS support node (SGSN) which is connected to a gateway GPRS support node (GGSN) for connection to a packet data network (PDN) for transmission of packet data from or to a mobile terminal (MT) of a mobile subscriber of the mobile radio network
**characterised by**
interworking between the packet data service and network functions of an Intelligent Network, of which a service switching function (SSF) is connected to the serving GPRS support node (SGSN) and a service control function (SCF) is connected via an interface (Gnew) to the serving GPRS support nodes with integrated service switching function (SGSN/SSF).

2. Method according to claim 1,
**characterised in that**
a number of states (IDLE, ATTA, PDPA) are used in accordance with a status model by the serving GPRS support nodes with integrated service switching function (SGSN/SSF) for handling the packet data service and status transitions between the states (IDLE, ATTA, PDPA) are evaluated for the interworking with the network functions of the intelligent network.

3. Method according to claim 1 or 2,
**characterised in that**
specific events (PDP_Activate, Attach) are used as trigger points for the packet data service to open a communication between service switching function (SSF) and service control function (SCF).

4. Method according to claim 3,
**characterised in that**
the event (Attach) consists of booking the mobile terminal (MT) into the mobile radio network.

5. Method according to claim 3,
**characterised in that**
the event (PDP_Activate) consists of the activation of a packet data protocol by the mobile terminal (MT).

6. Method according to claim 1 or 2,
**characterised in that**
existing parameters in the packet data network (PDN) are used as trigger points for the packet data service to open a communication between service switching function (SSF) and service control function (SCF).

7. Method according to claim 6,
**characterised in that**
the type of a packet data protocol provided for transmission of the packet data or the address of the gateway network node of the mobile radio network is used as a parameter.

8. Method according to one of the previous claims,
**characterised in that**
specific events (PDP_Activate, Detach, PDP_Deactivate, Packet_Threshold) are used as event detection points for the packet data service, of which the arrival is reported in each case by the service switching function integrated into the serving GPRS support node (SGSN/SSF).

9. Method according to one of the previous claims,
**characterised in that**
messages (IDP, GRA, RRBE, ERB, CAA, CAR) are sent and received over the interface (Gnew) for executing operations for interworking between service switching function (SSF) and service control function (SCF).

10. Method according to claim 9,
**characterised in that**
a message (IDP) to open an association between service switching function (SSF) and service control function (SCF) is triggered when a trigger point is reached.

11. Method according to claim 10,
**characterised in that**
subscriber data stored for the relevant mobile subscriber in the mobile radio network is used to determine whether the message (IDP) for opening an association is triggered.

12. Method according to claim 10,
**characterised in that**
subscriber context data which is requested on passing from one serving GPRS support node to another serving GPRS support node is used to determine whether the message (IDP) for opening an association is triggered.

13. Method according to claim 9,
**characterised in that**
a message (GRA) for requesting the service switching function to grant a particular action is triggered by the service control function (SCF).

14. Method according to claim 9,
**characterised in that**
a message (REJ) for requesting the service switching function to reject a particular action is triggered by the service control function (SCF), containing at least the cause of the rejection as a parameter.

15. Method according to claim 9,
**characterised in that**
a message (RRBE) for requesting the service switching function to monitor a particular event and report the arrival of the event is triggered by the service control function (SCF).

16. Method according to claim 15,
**characterised in that**
a message (ERB) for reporting the arrival of the event to the service control function (SCF) is triggered by the service switching function (SSF).

17. Method according to claim 9,
**characterised in that**
a message (CAA) for cancelling the association between service control function (SCF) and service switching function (SSF) is triggered by the service control function (SCF) to the service switching function (SSF).

18. Method according to claim 17,
**characterised in that**
a message (CAR) for confirming the cancellation of the association is triggered by the service switching function (SSF) to the service control function (SCF).

19. Method according to claims 9 to 18,
**characterised in that**
a number of parameters (e.g. IMS1, PDP type, QoS) are transferred in the messages (e.g. IDP) for the operation to be executed.

20. Method according to one of the previous claims,
**characterised in that**
the interworking between the packet data service and the service switching function integrated into the serving GPRS support node (SGSN/SSF) as well as the service control function (SCF) are applied to preliminary charging for packet data transmission.

21. Mobile radio network for handling a packet data service by a serving GPRS support node (SGSN) which is connected to a gateway GPRS support node (GGSN) for connection to a packet data network (PDN) for transmission of packet data from or to a mobile terminal (MT) of a mobile subscriber of the mobile radio network,
**characterised in that**,
for interworking between the packet data network and network functions of an Intelligent Network, the serving GPRS support node (SGSN) is provided with a service switching function, and a service control function (SCF) is connected via an interface (Gnew) to the serving GPRS support nodes with integrated service switching function (SGSN/SSF).

22. Mobile radio network according to claim 21,
**characterised in that**
the interface (Gnew) is provided for transmission of messages (IDP, GRA, RRBE, ERB, CAA, CAR) for executing operations according to the packet data service.

23. Mobile radio network according to claim 22,
**characterised in that**
the messages (e.g. IDP) have a number of parameters (e.g. IMS1, PDP type, QoS) for the operation to be executed.

## Revendications

1. Procédé pour le traitement d'un service de données en paquet dans un réseau de téléphonie mobile par un noeud de réseau de service (SGSN) qui est relié à un noeud de réseau d'accès (GGSN) pour le rattachement à un réseau de données en paquet (PDN) pour la transmission de données en paquet à partir d'un terminal de communication (MT) ou vers un tel terminal d'un abonné mobile du réseau de téléphonie mobile,
**caractérisé par**
un interfonctionnement du service de données en paquet avec des fonctions de réseau d'un réseau intelligent, dont une fonction de commutation de service (SSF) est connectée avec le noeud de réseau de service (SGSN) et une fonction de commande de service (SCF) est rattachée via une interface (Gnew) au noeud de réseau de service (SGSN/SSF) avec fonction intégrée de commutation de service.

2. Procédé selon la revendication 1,
**caractérisé en ce que**
le noeud de réseau de service (SGSN/SSF) avec fonction intégrée de commutation de service utilise plusieurs états (IDLE, ATTA, PDPA) selon un modèle d'état pour le traitement du service de données en paquet et des transitions d'état entre les états (IDLE, ATTA, PDPA) pour l'interfonctionnement avec les fonctions de réseau du réseau intelligent sont analysées.

3. Procédé selon la revendication 1 ou 2,
**caractérisé en ce que**
certains événements (PDP_Activate, Attach) sont utilisés comme points de déclenchement pour le service de données en paquet pour l'ouverture d'une communication entre la fonction de commutation de service (SSF) et la fonction de commande de service (SCF).

4. Procédé selon la revendication 3,
**caractérisé en ce que**
l'événement (Attach) se compose de l'inscription du terminal de communication (MT) dans le réseau de téléphonie mobile.

5. Procédé selon la revendication 3,
**caractérisé en ce que**
l'événement (PDP_Activate) est constitué par l'activation d'un protocole de données en paquet par le terminal de communication (MT).

6. Procédé selon la revendication 1 ou 2,
**caractérisé en ce que**
des paramètres existants dans le réseau de données en paquet (PDN) sont utilisés comme points de déclenchement pour le service de données en paquet pour l'ouverture d'une communication entre la fonction de commutation de service (SSF) et une fonction de commande de service (SCF).

7. Procédé selon la revendication 6,
**caractérisé en ce que**
on utilise comme paramètre le type d'un protocole de données en paquet prévu pour la transmission des données en paquet ou l'adresse du noeud de réseau d'accès du réseau de téléphonie mobile.

8. Procédé selon l'une quelconque des revendications précédentes,
**caractérisé en ce que**
certains événements (PDP_Activate, Detach, PDP_Deactivate, Packet_Threshold...) sont utilisés comme points d' événement pour le service de données en paquet, dont la survenance est signalée à chaque fois par la fonction de commutation de service intégrée dans le noeud de réseau de service (SGSN/SSF).

9. Procédé selon l'une quelconque des revendications précédentes,
**caractérisé en ce que**
les messages (IDP, GRA, RRBE, ERB, CAA, CAR) sont envoyés et reçus pour l'exécution d'opérations pour l'interfonctionnement entre la fonction de commutation de service (SSF) et la fonction de commande de service (SCF) par l'intermédiaire de l'interface (Gnew).

10. Procédé selon la revendication 9,
**caractérisé en ce que**
un message (IDP) destiné à l'ouverture d'une association entre la fonction de commutation de service (SSF) et la fonction de commande de service (SCF) est déclenché lorsqu'un point de déclenchement est atteint.

11. Procédé selon la revendication 10,
**caractérisé en ce que**,
à l'aide de données d'abonné stockées respectivement pour l'abonné mobile dans le réseau de téléphonie mobile, on détermine si le message (IDP) pour l'ouverture d'une association est déclenché.

12. Procédé selon la revendication 10,
**caractérisé en ce que**,
à l'aide de données de contexte d'abonné, qui sont interrogées d'une transmission d'un noeud de réseau de service à un autre noeud de réseau de service, on détermine si le message (IDP) destiné à l'ouverture d'une association est déclenché.

13. Procédé selon la revendication 9,
**caractérisé en ce que**
la fonction de commande de service (SCF) déclenche un message (GRA) pour ordonner à la fonction de commutation de service (SSF) d'autoriser une action souhaitée.

14. Procédé selon la revendication 9,
**caractérisé en ce que**
la fonction de commande de service (SCF) déclenche un message (REJ) destiné à ordonner à la fonction de commutation de service (SSF) de ne pas autoriser une action souhaitée, lequel message contient au moins la cause du rejet de l'action comme paramètre.

15. Procédé selon la revendication 9,
**caractérisé en ce que**
la fonction de commande de service (SCF) déclenche un message (RRBE) destiné à ordonner à la fonction de commutation de service (SSF) de vérifier un événement défini et de signaler la survenance de l'événement.

16. Procédé selon la revendication 15,
**caractérisé en ce que**
la fonction de commande de service (SSF) déclenche un message (ERB) pour le signalement de la survenance de l'événement à la fonction de commande de service (SCF).

17. Procédé selon la revendication 9,
**caractérisé en ce que**
la fonction de commande de service (SCF) déclenche un message (CAA) pour l'achèvement d'une association entre la fonction de commande de service (SCF) et la fonction de commutation de service (SSF) à destination de la fonction de commutation de service (SCF).

18. Procédé selon la revendication 17,
**caractérisé en ce que**
la fonction de commutation de service (SSF) déclenche un message (CAR) pour confirmer l'achèvement de l'association à la fonction de commande de service (SCF).

19. Procédé selon l'une quelconque des revendications 9 à 18,
**caractérisé en ce que**
plusieurs paramètres (par exemple IMSI, PDP Type, QoS) pour l'opération à exécuter sont transmis dans les messages (par exemple IDP).

20. Procédé selon l'une quelconque des revendications précédentes,
**caractérisé en ce que**
l'interfonctionnement entre le service de données en paquet et la fonction de commutation de service intégrée dans le noeud de réseau de service (SGSN/SSF) et la fonction de commande de service (SCF) est appliqué à une taxation préalable de la transmission de données en paquet.

21. Réseau de téléphonie mobile pour le traitement d'un service de données en paquet par un noeud de réseau de service (SGSN), qui est relié à un noeud de réseau d'accès (GGSN) pour le rattachement à un réseau de données de paquet (PDN) pour la transmission de données en paquet à partir d'un terminal de communication ou vers un terminal de communication (MT) d'un abonné mobile du réseau de téléphonie mobile,
**caractérisé en ce que**
le noeud de réseau de service (SGSN) est doté d'une fonction de commutation de service (SSF) pour l'interfonctionnement du service de données en paquet avec des fonctions de réseau d'un réseau intelligent et une fonction de commande de service (SCF) est rattachée via une interface (Gnew) au noeud de réseau de service (SGSN/SSF) avec fonction intégrée de commutation de service.

22. Réseau de téléphonie mobile selon la revendication 21,
**caractérisé en ce que**
l'interface (Gnew) pour la transmission de messages (IDP, GRA, RRBE, ERB, CAA, CAR) est prévue pour l'exécution d'opérations selon le service de données en paquet.

23. Réseau de téléphonie mobile selon la revendication 22,
**caractérisé en ce que**
les messages (par exemple IDP) présentent plusieurs paramètres (par exemple IMSI, PDP Type, QoS) pour l'opération à exécuter.
